# FASCICULE DE BREVET EUROPEEN

(11) **EP 2 526 451 B1**
(45) Date de publication et mention de la délivrance du brevet: **29.11.2017**
(21) Numéro de dépôt: 11700539.7
(22) Date de dépôt: 17.01.2011
(51) Int. Cl.: B29D 11/00, G02B 7/183, G02B 5/08

(54) **PROCEDE DE REALISATION D'UN MIROIR COMPOSITE ET MIROIR COMPOSITE OBTENU SELON LE PROCEDE**
VERFAHREN ZUR HERSTELLUNG EINES VERBUNDSTOFFSPIEGELS UND DURCH DAS VERFAHREN ERHALTENER VERBUNDSTOFFSPIEGEL
METHOD FOR PRODUCING A COMPOSITE MIRROR AND COMPOSITE MIRROR OBTAINED BY THE METHOD

(30) Priorité: 20.01.2010 FR 1050354
(43) Date de publication de la demande: 28.11.2012
(73) Titulaire: Airbus Safran Launchers SAS, 75015 Paris (FR)
(72) Inventeur: DESAGULIER, Christian, F-75016 Paris (FR); BARIL, Stéphane, F-78510 Triel sur Seine (FR)
(74) Mandataire: Ilgart, Jean-Christophe
(86) Numéro de dépôt international: PCT/EP2011/050495
(87) Numéro de publication internationale: WO 2011/089079

(56) Documents cités:
- JP-A- 56 088 101
- JP-A- 58 169 102
- JP-A- 61 238 002
- JP-A- 63 131 102
- US-B1- 6 176 588

## Description

La présente invention concerne un procédé de réalisation d'un miroir composite. Elle concerne également un miroir composite obtenu selon ce procédé. Le document US 6 176 588 B1 divulgue un miroir selon le préambule de la revendication 6. La réalisation de miroirs optiques se heurte à la difficulté d'atteindre une précision optique stable en température, notamment aux courtes longueurs d'ondes pour un spectre correspondant aux longueurs d'ondes du rayonnement visible (de 400 nm à 700 nm) et pour le proche infrarouge. Cette précision optique doit être obtenue globalement et localement. En d'autres termes, elle doit être obtenue en chaque point du miroir et pour la forme générale de celui-ci. Le miroir doit être capable de fonctionner dans une large plage de températures allant de 20°C pour un satellite d'observation de la terre en orbite basse ou en orbite géostationnaire, jusqu'à moins 150°C pour l'observation de l'espace profond.

Cette précision optique peut être obtenue avec le verre, notamment le verre commercialisé sous les marques Zérodur ou ULE, soit par le béryllium, soit par des matériaux céramiques tels que le carbure de silicium (SiC). Ces matériaux monolithiques répondent certes aux spécifications demandées. Ils présentent toutefois l'inconvénient d'être lourds. Leur masse surfacique va en effet de 20 à 50 kg/m2. Cela limite leur diamètre pour tenir le budget masse du satellite et par suite, cela limite la surface du théâtre d'observation du sol ou du ciel.

On connait par ailleurs (US 2003/0117730) un réflecteur céramique ultra léger et ultra rigide. Ce réflecteur est réalisé en carbure de silicium évidé pour réaliser un allégement.

On connait également (FR 2 747 240) un procédé pour fabriquer un réflecteur d'antenne constitué d'un matériau composite renforcé par des fibres et ayant une haute qualité optique de surface. Le procédé décrit dans ce document consiste à infiltrer une résine entre une coque structurale et un moule.

On connait enfin (EP 0 649 036) un réflecteur constitué d'un matériau sandwich.

Toutefois, ces divers procédés ne permettent pas de fabriquer un miroir composite léger présentant des caractéristiques optiques optimales. La présente invention a pour objet un miroir qui remédie à ces inconvénients.

Le procédé est caractérisé en ce qu'il comporte les étapes consistant à :
- prévoir une ébauche en verre à faible coefficient de dilatation ;
- usiner une forme convexe dans l'ébauche en verre ;
- draper une peau avant imprégnée de résine sur la forme convexe de l'ébauche en verre ;
- usiner dans une structure porteuse arrière une forme concave complémentaire de la forme convexe usinée dans l'ébauche en verre ;
- coller la forme concave de la structure porteuse sur la forme convexe de l'ébauche en verre ;
- usiner une forme convexe sur la structure porteuse ;
- draper une peau arrière imprégnée de résine sur un moule à faible coefficient de dilatation dont la forme correspond à la forme convexe de la structure porteuse ;
- coller une peau arrière sur la forme convexe de la structure porteuse ;
- retourner l'ensemble formé par l'ébauche en verre, la peau avant, la structure porteuse et la peau arrière, de telle sorte que l'ébauche se trouve en partie supérieure de l'ensemble ;
- usiner et polir un miroir dans l'ébauche en verre.

De préférence on revêt la surface du miroir d'une couche d'aluminium ou d'une couche d'argent sur laquelle on dépose une couche de silice.

Dans une réalisation particulière, la structure porteuse est une structure en nid d'abeille. Avantageusement, cette structure porteuse peut être constituée de triangles équilatéraux juxtaposés.

Avantageusement, la peau composite avant est fixée sur la forme convexe de l'ébauche en verre sans ajout d'adhésif de liaison autre que la résine d'imprégnation.

L'invention concerne par ailleurs un miroir composite selon la revendication 6 constitué d'une structure porteuse ayant une première et une seconde face, d'une peau composite avant fixée à la première face de la structure porteuse, d'une forme en verre à faible coefficient de dilatation fixée sur la peau avant, d'une peau composite arrière fixée à la seconde face de la structure porteuse, où la forme en verre à faible coefficient de dilatation est revêtue d'une couche d'aluminium ou d'une couche d'argent sur laquelle est déposée une couche de silice.

Avantageusement, la structure porteuse est une structure en nid d'abeille. Cette structure porteuse peut être constituée de triangles équilatéraux juxtaposés.

Dans un mode de réalisation préféré, la forme en verre à faible coefficient de dilatation est fixée à la peau avant sans ajout d'adhésif de liaison autre que la résine d'imprégnation.

D'autres caractéristiques et avantages de la présente invention apparaîtront à la lecture de la description qui suit faite en référence aux figures annexées. Sur ces figures :
- les figures la à 1i illustrent les différentes étapes du procédé de l'invention ;
- la figure 2 est une vue en plan d'un exemple de structure porteuse conforme à l'invention ;
- la figure 3 est une vue en perspective de la structure porteuse de la figure 2 appliquée sur une forme convexe en verre ;
- la figure 4 est une vue en coupe d'une partie de la structure d'un miroir composite conforme à l'invention.

On a représenté sur la figure la une ébauche en verre 2 de forme cylindrique. Ce verre est un verre à faible coefficient de dilatation. Il s'agit par exemple de Zérodur®. Dans l'ébauche 2 on usine une forme convexe 4, comme schématisée par les traits pointillés.

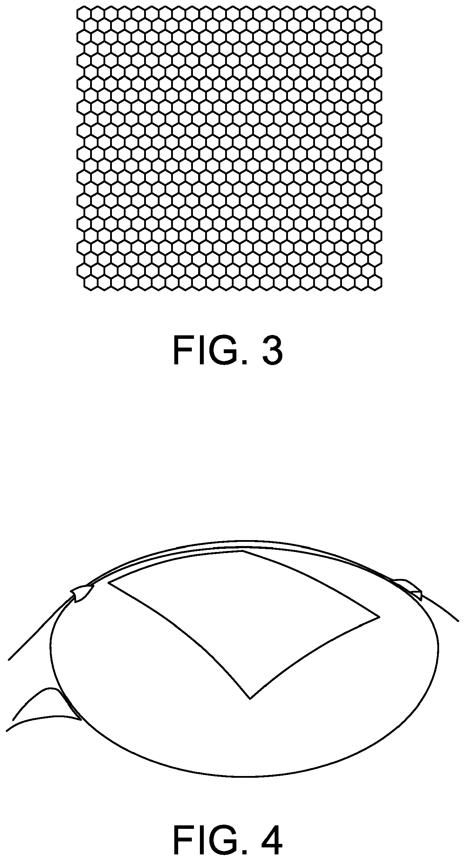

A l'étape b on drape une peau avant composite constituée de fibre de carbone imprégnée de résine 6 sur la forme convexe de l'ébauche en Zérodur® 2 (voir également figure 3). La peau composite possède un coefficient de dilatation égal à celui du Zérodur®. Afin de fixer la peau avant 6 sur l'ébauche en Zérodur® 2 on peut procéder par liaison thermique, ionique ou par ultraviolet. On cuit ensuite l'ensemble si nécessaire. Dans un mode de réalisation préféré la peau composite avant 6 est fixée sur la forme convexe de l'ébauche 2 sans ajout d'adhésif autre que la résine d'imprégnation.

A l'étape 1c on fabrique une structure porteuse 8. Cette structure porteuse est une structure intercalaire à base de fibres de carbone.

On drape douze plis de 50 microns drapés à zéro degré et à plus ou moins 60° par rapport à la couche à zéro degré. Les fibres de carbone YSH50® sont imprégnées d'une résine cyanate ester RS3. Le taux d'imprégnation est par exemple de 38%.

Dans un autre mode de réalisation, la structure porteuse peut être constituée de triangles équilatéraux juxtaposés.

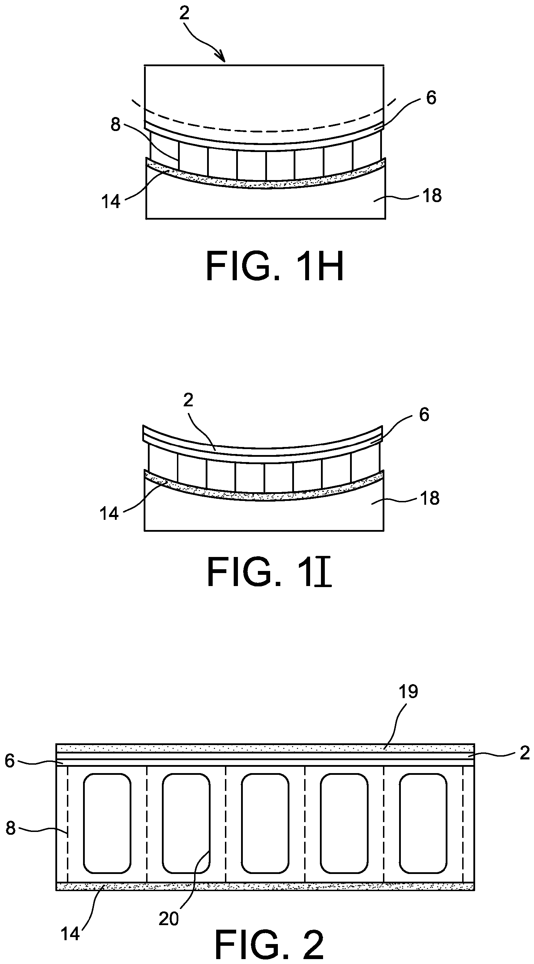

On peut utiliser également un matériau disponible sur le marché susceptible de répondre aux besoins tel que du nid d'abeille à base de fibres de carbone commercialisé sous la marque de fabrique ULTRACORE®, comme représenté sur la figure 2.

On usine cette structure 8 de manière à réaliser une forme concave 10 dont la forme correspond à la forme convexe de la peau composite constituée de fibre de carbone 6. A l'étape 1d on a retourné la structure porteuse 8 et on est venu la placer sur la peau composite de fibre de carbone 6. On colle la structure 8 sur la peau en fibre de carbone 6. On usine l'arrière de la structure 8 de manière à réaliser une forme convexe comme schématisé par les pointillés 11. On peut usiner la structure 8 de manière que l'usinage soit parallèle à la forme de la peau 6. On peut également l'usiner de manière qu'elle présente une autre forme, par exemple une forme plus épaisse au centre que sur les bords.

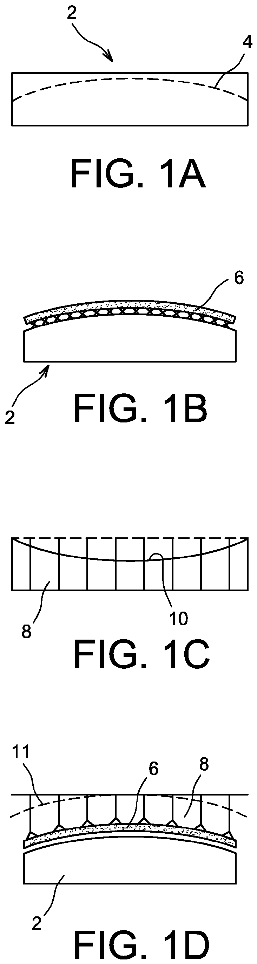

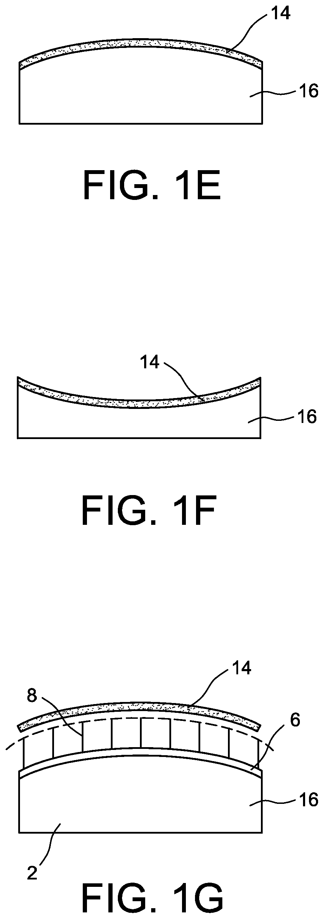

Parallèlement on procède au drapage d'une peau arrière 14 sur un moule à faible coefficient de dilatation, par exemple un moule en invar. Ce moule présente une forme convexe, comme représenté sur la figure le. Ou bien, il peut présenter une forme concave comme représenté sur la figure 1f.

On cuit ensuite la peau arrière 14 si nécessaire, on démoule ensuite la peau arrière 14 et on vient la coller sur la structure porteuse 8 comme schématisé sur la figure 1g.

Dans les deux cas la forme convexe ou concave de la peau arrière 14 correspond à la forme usinée 10 de la structure porteuse 8.

A partir de la position représentée sur la figure 1g l'ébauche en Zérodur® 2 étant en position inférieure, on procède à la retourne de l'ensemble constitué par l'ébauche en Zérodur®, la peau avant 6 la structure porteuse 8 et la peau arrière 14 pour aboutir à la position représentée sur la figure 1h. L'ensemble repose sur un berceau 18. Dans une variante de réalisation, ce berceau peut être constitué par le moule en invar de forme concave 16 représentée sur la figure 1f. On usine alors la face arrière de l'ébauche de Zérodur® 2 comme schématisé par les hachures de la figure 1h. On laisse une épaisseur de Zérodur® aussi faible que possible afin de diminuer au maximum le poids du miroir. A titre d'exemple cette épaisseur est comprise entre 0,5 et 1mm. On polit ensuite l'ébauche usinée.

Le polissage est l'étape qui permet la compensation des écarts de prédiction des déformées globale et locale.

Une autre possibilité consiste à usiner et à polir non pas à la surface théorique mais à une surface modifiée de façon à ce que le miroir retrouve sa surface théorique à la température et à l'hygrométrie (0%) de service.

On aboutit ainsi à l'étape finale représentée sur la figure 1i. La forme en verre à faible de coefficient de dilatation 2 est revêtue d'une couche d'aluminium ou d'une couche d'argent sur laquelle est déposée une couche de SiO2.

La structure est suffisamment rigide pour ne pas être altérée par la finesse des dépôts métallique et de silice.

On a représenté sur la figure 2 une vue en coupe partielle d'une partie du miroir composite conforme à la présente invention. On trouve, de bas en haut, la peau arrière 14, la structure porteuse 8, la peau avant 6 supportant la couche de Zérodur 2 usinée et polie. Sur la couche de Zérodur 2 on trouve le dépôt d'aluminium ou d'argent et le dépôt de silice 19 on observe en outre que, dans l'exemple de réalisation, la structure porteuse 8 comporte des ajours 20 destinés à réduire encore sa masse.

La précision de forme et la stabilité thermique de la peau avant 6 est ajustée en lui conférant une séquence de drapage et un taux d'imprégnation de résine adapté de façon à obtenir un coefficient de dilatation thermique identique à celui du Zérodur®. La résine est par exemple un cyanate ester à faible taux de reprise hydrique.

Liaison de la peau 6 avec le matériau de la structure porteuse 8 est réalisée au moyen d'un adhésif en quantité optimisée de façon à limiter les distorsions induites.

La géométrie de la structure porteuse 8 est le résultat d'une optimisation globale. La structure porteuse peut être réalisée dans le même matériau, avec la même séquence de drapage que les peaux afin d'obtenir le même coefficient de dilatation thermique. Ce coefficient est approximativement de 0.02x10⁻⁶/°C.

Trois paramètres majeurs gouvernent la précision finale du miroir composite :
- la précision de drapage des peaux 6 et 14 et la précision de l'isotropie du matériau de la structure porteuse 8. Cette précision peut être obtenue par une machine de drapage automatique ;
- le taux d'imprégnation en résine (cyanate) du pré-imprégné. En première approximation une précision de plus ou moins 1% est désirable ;
- le cycle de cuisson. Il doit être adapté afin de minimiser les contraintes à terme enregistrées lors du refroidissement. On utilise des résines à faible température de cuisson, par exemple inférieures à 100° C, assorties d'un gradient thermique inférieur à 2°C.

## Revendications

1. Procédé de réalisation d'un miroir composite, comportant les étapes consistant à :
- prévoir une ébauche (2) en verre à faible coefficient de dilatation ;
- usiner une forme convexe (4) dans l'ébauche en verre ;
- draper une peau avant (6) imprégnée de résine sur la forme convexe (4) de l'ébauche en verre (2) ;
- usiner dans une structure porteuse arrière (8) une forme concave (10) complémentaire de la forme convexe (4) usinée dans l'ébauche en verre (2) ;
- coller la forme concave (10) de la structure porteuse (8) sur la forme convexe de l'ébauche en verre ;
- usiner une forme convexe (12) sur la structure porteuse ;
- draper une peau arrière (14) imprégnée de résine sur un moule (16) à faible coefficient de dilatation dont la forme correspond à la forme convexe de la structure porteuse ;
- coller la peau arrière (14) sur la forme convexe (12) de la structure porteuse (8) retourner l'ensemble formé par l'ébauche en verre (2), la peau avant (6), la structure porteuse (8) et la peau arrière
- (14) de sorte que l'ébauche (2) se trouve en partie supérieure de l'ensemble ;
- usiner et polir un miroir dans l'ébauche en verre (2).

2. Procédé de réalisation d'un miroir selon la revendication 1, **caractérisé en ce que** l'on revêt la surface du miroir d'une couche d'aluminium ou d'une couche d'argent (18) sur laquelle on dépose une couche de silice.

3. Procédé de réalisation d'un miroir selon la revendication 1 ou 2, **caractérisé en ce que** la structure porteuse (8) est une structure en nid d'abeille.

4. Procédé de réalisation d'un miroir selon la revendication 1 ou 2, **caractérisé en ce que** la structure porteuse (8) est constitué de triangles équilatéraux juxtaposés.

5. Procédé de réalisation d'un miroir selon l'une des revendications 1 à 4, **caractérisé en ce que** la peau composite avant (6) est fixée sur la forme convexe (4) de l'ébauche en verre sans ajout d'adhésif de liaison autre que la résine d'imprégnation.

6. Miroir composite, constitué d'une structure porteuse (8) ayant une première et une seconde face; et d'une forme en verre (2) à faible coefficient de dilatation ayant une première face revêtue d'une couche d'aluminium ou d'une couche d'argent sur laquelle est déposée une couche de SiO₂ (19) et une seconde face **caractérisé par** une peau composite avant (6) ayant une première face et une seconde face, la première face de ladite peau composite avant (6) étant fixée à la seconde face de ladite forme en verre (2) à faible coefficient de dilatation, la seconde face de ladite peau composite avant (6) étant fixée à ladite première face de la structure porteuse (8), et par une peau composite arrière (14) fixée à la seconde face de la structure porteuse (8).

7. Miroir composite selon la revendication 6, **caractérisé en ce que** la structure porteuse (8) est une structure en nids d'abeilles.

8. Miroir composite selon la revendication 6, **caractérisé en ce que** la structure porteuse (8) est constituée de triangles équilatéraux juxtaposés.

9. Miroir composite selon l'une des revendications 6 à 8, **caractérisé en ce que** la forme en verre à faible coefficient de dilatation (2) est fixée à la peau avant (6) sans ajout d'adhésif de liaison autre que la résine d'imprégnation.

## Patentansprüche

1. Verfahren zum Herstellen eines Verbundstoffspiegels, umfassend die nachfolgenden Schritte:
- Bereitstellen eines Rohlings (2) aus Glas mit geringem Ausdehnungskoeffizienten;
- Einarbeiten einer konvexen Form (4) in den Glasrohling;
- Aufziehen einer mit Harz getränkten vorderen Haut (6) auf die konvexe Form (4) des Glasrohlings (2);
- Einarbeiten einer konkaven Form (10), die zur in den Glasrohling (2) eingearbeiteten konvexen Form komplementär ist, in eine rückwärtige Tragstruktur (8);
- Aufkleben der konkaven Form (10) der Tragstruktur (8) auf die konvexe Form des Glasrohlings;
- Einarbeiten einer konvexen Form (12) in die Tragstruktur;
- Aufziehen einer mit Harz getränkten hinteren Haut (14) auf eine Gießform (16) mit geringem Ausdehnungskoeffizienten, deren Form der konvexen Form der Tragstruktur entspricht;
- Aufkleben der hinteren Haut (14) auf die konvexe Form (12) der Tragstruktur (8);
- Umdrehen der aus dem Glasrohrling (2), der vorderen Haut (6), der Tragstruktur (8) und der hinteren Haut (14) gebildeten Einheit so, dass der Rohling (2) im oberen Bereich der Einheit zu liegen kommt;
- Einarbeiten eines Spiegels in den Rohling (2) und Polieren.

2. Verfahren zum Herstellen eines Spiegels nach Anspruch 1, **dadurch gekennzeichnet, dass** die Oberfläche des Spiegels mit einer Aluminiumschicht oder mit einer Silberschicht (18) überzogen wird, auf die eine Kieselsäureschicht aufgebracht wird.

3. Verfahren zum Herstellen eines Spiegels nach Anspruch 1 oder 2, **dadurch gekennzeichnet, dass** die Tragstruktur (8) eine Wabenstruktur ist.

4. Verfahren zum Herstellen eines Spiegels nach Anspruch 1 oder 2, **dadurch gekennzeichnet, dass** die Tragstruktur (8) aus nebeneinandergeordneten, gleichseitigen Dreiecken besteht.

5. Verfahren zum Herstellen eines Spiegels nach einem der Ansprüche 1 bis 4, **dadurch gekennzeichnet, dass** die vordere Verbundstoffhaut (6) an die konvexe Form (4) des Glasrohlings ohne Hinzufügen eines anderen Haftvermittlers als das Tränkharz befestigt wird.

6. Verbundstoffspiegel, bestehend aus einer Tragstruktur (8) mit einer ersten und einer zweiten Seite; und aus einer Glasform (2) mit geringem Ausdehnungskoeffizienten und mit einer ersten Seite, die mit einer Aliminiumschicht oder mit einer Silberschicht überzogen ist, auf die eine Schicht aus SiO₂ (19) aufgebracht ist, und mit einer zweiten Seite,
**gekennzeichnet durch**
eine vordere Verbundstoffhaut (6) mit einer ersten Seite und einer zweiten Seite, wobei die erste Seite der vorderen Verbundstoffhaut (6) an die zweite Seite der Glasform (2) mit geringem Ausdehnungskoeffizienten befestigt ist, wobei die zweite Seite der vorderen Verbundstoffhaut (6) an die erste Seite der Tragstruktur (8) befestigt ist, und durch
eine hintere Verbundstoffhaut (14), die an die zweite Seite der Tragstruktur (8) befestigt ist.

7. Verbundstoffspiegel nach Anspruch 6, **dadurch gekennzeichnet, dass** die Tragstruktur (8) eine Wabenstruktur ist.

8. Verbundstoffspiegel nach Anspruch 6, **dadurch gekennzeichnet, dass** die Tragstruktur (8) aus nebeneinandergeordneten, gleichseitigen Dreiecken besteht.

9. Verbundstoffspiegel nach einem der Ansprüche 6 bis 8, **dadurch gekennzeichnet, dass** die Glasform mit geringem Ausdehnungskoeffizienten (2) an die vordere Haut (6) ohne Hinzufügen eines anderen Haftvermittlers als das Tränkharz befestigt ist.

## Claims

1. A method for producing a composite mirror, comprising the steps of:
- providing a glass blank (2) with low coefficient of expansion;
- machining a convex shape (4) in the glass blank;
- laying a front skin (6) impregnated with resin over the convex shape (4) of the glass blank (2);
- machining, in a rear supporting structure (8), a concave shape (10) matching the convex shape (4) machined in the glass blank (2);
- gluing the concave shape (10) of the supporting structure (8)onto the convex shape of the glass blank;
- machining a convex shape (12) in the supporting structure;
- laying a rear skin (14) impregnated with resin in a mould (16) with low coefficient of expansion whose shape matches the convex shape of the supporting structure;
- gluing the rear skin(14) onto the convex shape (12) of the supporting structure(8), turning over the assembly formed by the glass blank (2), the front skin (6), the supporting structure (8) and the rear skin (14) so that the blank (2) lies in the upper portion of the assembly;
- machining and polishing a mirror in the glass blank (2).

2. The method for producing a mirror according to claim 1, **characterized in that** the surface of the mirror is coated with a layer of aluminum or a layer of silver (18) on which a silica layer is deposited.

3. The method for producing a mirror according to claim 1 or 2, **characterized in that** the supporting structure (8) is a honeycomb structure.

4. A method for producing a mirror according to claim 1 or 2, **characterized in that** the supporting structure (8) is formed of juxtaposed equilateral triangles.

5. The method for producing a mirror according to one of claims 1 to 4, **characterized in that** the front composite skin (6) is fixed onto the convex shape (4) of the glass blank without adding any binding adhesive other than the impregnated resin.

6. A composite mirror, formed of a supporting structure (8) having a first and second face, and a shaped glass (2) with low coefficient of expansion having a first face coated with a layer of aluminum or a layer of silver on which a layer of SiO₂ (19) is deposited and a second face,
**characterized by** a front composite skin (6) having a first face and a second face, the first face of said front composite skin (6) being fixed to the second face of said shaped glass (2) with low coefficient of expansion, the second face of said from composite skin (6) being fixed to the first face of the supporting structure (8), and a rear composite skin (14) fixed onto the second face of the supporting structure (8).

7. The composite mirror according to claim 6, **characterized in that** the supporting structure (8) is a honeycomb structure.

8. The composite mirror according to claim 6, **characterized in that** the supporting structure (8) is formed of juxtaposed equilateral triangles.

9. The composite mirror according to one of claims 6 to 8, **characterized in that** the shaped glass with low coefficient of expansion (2) is fixed onto the front skin (6) without adding any binding adhesive other than the impregnated resin.
